# EUROPÄISCHE PATENTSCHRIFT

(11) **EP 3 386 815 B1**
(45) Veröffentlichungstag und Bekanntmachung des Hinweises auf die Patenterteilung: **06.04.2022**
(21) Anmeldenummer: 16781411.0
(22) Anmeldetag: 12.10.2016
(51) Int. Cl.: B60T 8/94, B60T 8/74

(54) **VERFAHREN ZUR STEUERUNG EINES HYDRAULISCHEN BREMSSYSTEMS**
METHOD FOR CONTROLLING A HYDRAULIC BRAKING SYSTEM
PROCÉDÉ POUR COMMANDER UN SYSTÈME DE FREINAGE HYDRAULIQUE

(30) Priorität: 08.12.2015 DE 102015224601
(43) Veröffentlichungstag der Anmeldung: 17.10.2018
(73) Patentinhaber: Robert Bosch GmbH, 70442 Stuttgart (DE)
(72) Erfinder: STREHLE, Alfred, 70736 Fellbach (DE)
(86) Internationale Anmeldenummer: PCT/EP2016/074465
(87) Internationale Veröffentlichungsnummer: WO 2017/097465

(56) Entgegenhaltungen:
- JP-A- H11 268 624
- JP-A- 2004 098 705
- JP-A- 2013 086 619
- JP-A- 2015 093 586

## Beschreibung

### Stand der Technik

Die Offenlegungsschrift DE 10 2008 054 853 A1 offenbart ein Verfahren zur Steuerung oder Regelung eines elektromechanischen Bremskraftverstärkers einer hydraulischen Fahrzeugbremsanlage. Die Erfindung schlägt vor eine Hilfskraft des Bremskraftverstärkers nicht ausschließlich in Abhängigkeit von einem Betätigungsweg oder einer Muskelkraft zu betreiben.

Die Offenlegung JP H 11 26 86 24 A befasst sich mit einer Verbesserung der Kontrollierbarkeit und Stabilität eines automatischen Bremssystems unter Berücksichtigung einer hydraulischen nicht-linearen Bremscharakterisitik.

### Offenbarung der Erfindung

Die vorliegende Erfindung befasst sich mit einem Verfahren zur Steuerung eines hydraulischen Bremssystems eines Fahrzeugs. Das Bremssystem weist einen steuerbaren ersten Bremsdruckerzeuger auf, sowie einen Geber für ein Verzögerungssignal des Fahrzeugs. Im erfindungsgemäßen Verfahren wird mittels des ersten Bremsdruckerzeugers eine Druckcharakteristik auf einen ursprünglichen Sollbremsdruck aufgeprägt. Ein Verzögerungssignal des Fahrzeugs wird auf das Vorhandensein einer der Druckcharakteristik entsprechenden Verzögerungscharakteristik hin überwacht. Bei Vorhandensein der entsprechenden Verzögerungscharakteristik wird der ursprüngliche Sollbremsdruck beibehalten. Dabei wird die Druckcharakteristik weiterhin aufgeprägt. Bei Fehlen der entsprechenden Verzögerungscharakteristik im Verzögerungssignal, wird der ursprüngliche Sollbremsdruck angepasst. In der Regel wird der ursprüngliche Sollbremsdruck abgesenkt. Bei der Anpassung, insbesondere bei der Absenkung, des ursprünglichen Sollbremsdrucks wird die Druckcharakteristik weiter aufgeprägt.

Unter einem steuerbaren ersten Bremsdruckerzeuger kann ein steuerbarer Bremskraftverstärker verstanden werden. Ein steuerbar Bremskraftverstärker kann in Form eines elektrischen, elektromechanischen, hydraulischen, pneumatischen und oder magnetischen Bremskraftverstärkers vorliegen. Aufgrund der Tatsache, dass dieser steuerbar ist, kann auf einfache Art und Weise der durch den Bremskraftverstärker hervorgerufene Bremsdruck verändert werden. Unter einem Geber für das Verzögerungssignal kann ein Sensor verstanden werden, welcher die Verzögerung des Fahrzeugs direkt misst, also ein Beschleunigungssensor. Ebenso kann unter einem ersten Bremsdruckerzeuger ein Aktorelement werden, beispielsweise ein Plunger, oder eine Pumpe, gegebenenfalls mit einem Speicher. Der erste Bremsdruckerzeuger muss lediglich in der Lage sein autonom Druck in einem Bremssystem einzustellen. Unter autonom kann verstanden werden, dass zumindest teilweise fahrerunabhängig Druck im Bremssystem eingestellt werden kann.

Unter einem Verzögerungssignal kann ein Signal verstanden werden, welches direkt einer Verzögerung entspricht, jedoch auch ein Signal, welches nachbearbeitet ist, beispielsweise durch Bilden einer zeitlichen Ableitung des Verzögerungssignals. Insofern kann unter einem Geber für das Verzögerungssignal auch ein eigentlicher Sensor verbunden mit einer nachgelagerten oder integrierten Auswerteeinheit verstanden werden, welche beispielsweise eine solche zeitliche Ableitung erzeugt. In vorteilhafter Weise kann durch ein Überwachen, ob das Verzögerungssignal des Fahrzeugs eine - der aufgeprägten Druckcharakteristik entsprechende - Verzögerungscharakteristik aufweist leicht entschieden werden, ob eine Fahrsituation vorliegt, in der eine Anpassung des vorliegenden Sollbremsdrucks notwendig ist. Eine solche Fahrsituation kann beispielsweise durch einzelne blockierende Räder des Fahrzeugs hervorgerufen sein. Durch ein solches einfaches Erkennen kann ein Ausfall einer Modulationseinheit, beispielsweise eines ESP/ABS-Systems durch Betreiben des ersten Bremsdruckerzeugers kompensiert werden. Das erfindungsgemäße Verfahren stellt also eine redundante Rückfallebene zur Verfügung um fahrkritische Situationen zu meistern. Dies ist insbesondere bei Systemen wichtig, wie sie bei hoch- oder teilautomatisierten Fahrzeugen verwendet werden. In solchen Systemen ist der Fahrer zumindest zeitweise nicht mehr an der Fahrzeugführung direkt beteiligt. Fällt in solchen Systemen beispielsweise ein ESP/ABS-System aus, so kann mittels des Bremskraftverstärkers automatisch ein fahrstabilisierender Bremseingriff vorgenommen werden.

Da bei Vorhandensein einer entsprechenden Verzögerungscharakteristik auf eine unkritische Fahrsituation geschlossen werden kann, ist eine Anpassung/Veränderung des ursprünglichen Sollbremsdrucks nicht erforderlich.

Durch das Absenken des Sollbremsdrucks kann bei vorliegenden blockierenden Rädern des Fahrzeugs der Blockade entgegengewirkt werden, wodurch die Sicherheit in kritischen Fahrsituationen verbessert wird. Durch Überwachen auf ein Verschwinden der Verzögerungscharakteristik lässt sich auf einfache Art erkennen, ob wenigstens eines der Räder blockiert und entsprechende Maßnahmen einleiten.

In Ausgestaltung des Verfahrens wird durch Aufprägen der Druckcharakteristik eine Änderung in der Verzögerung des Fahrzeugs hervorgerufen. Aufgrund der Tatsache, dass eine Änderung im vorherrschenden Druck des Bremssystems, welche eine gewisse Charakteristik aufweist, auch die Verzögerung des Fahrzeugs beeinflusst, kann eine der Druckcharakteristik entsprechende Verzögerungscharakteristik überwacht werden. Dies hat zum Vorteil, dass der im Bremssystem erzeugte Bremsdruck anhand des vorherrschenden Verzögerungssignals plausibel isoliert werden kann. Ist der vorherrschende Druck im Bremssystem im Vergleich zur erzeugten Verzögerung, insbesondere die vorherrschende Druckcharakteristik im Vergleich zur vorherrschenden Verzögerungscharakteristik plausibel, so liegt eine normale Fahrsituation vor. Weicht die vorliegende Verzögerungscharakteristik von der Druckcharakteristik ab, oder ist diese im Verzögerungssignal verändert, bzw. nicht mehr vorhanden, so kann auf eine fahrkritische Situation geschlossen werden.

Vorteilhafter Weise wird der ursprüngliche Sollbremsdruck um einen vorgegebenen Druckwert abgesenkt wird. Dadurch kann auf einfache Weise die Reaktion auf kritische Fahrsituationen vordefiniert werden, indem der Betrag, um den abgesenkt werden soll, festgelegt wird. Selbstverständlich können auch mehrere Druckwerte um die abgesenkt werden soll in Form einer Tabelle abhängig von vorliegenden Fahrsituationen hinterlegt sein.

In Ausgestaltung des Verfahrens wird nach dem Absenken das Verzögerungssignal in Bezug auf die Verzögerungscharakteristik für ein vorgegebenes erstes Zeitintervall überwacht. Durch Überwachen für die Zeitdauer des ersten Zeitintervalls kann nach Ablauf desselben entschieden werden, wie die getroffene Maßnahme, hier der abgesenkte Sollbremsdruck, die Fahrsituation beeinflusst hat und welche weiteren Maßnahmen erforderlich sind.

In vorteilhafter Ausgestaltung wird für den Fall, dass die Verzögerungscharakteristik im Verzögerungssignal innerhalb des vorgegebenen ersten Zeitintervalls wieder vorhanden ist, der Bremsdruck wieder erhöht; dabei wird die Druckcharakteristik bei der Erhöhung des Bremsdrucks weiter aufgeprägt.

Für den Fall, dass die Verzögerungscharakteristik im Verzögerungssignal innerhalb des vorgegebenen ersten Zeitintervalls weiterhin nicht vorhanden ist, wird der Bremsdruck weiter reduziert. Auch beim weiteren Absenken wird die Druckcharakteristik weiter aufgeprägt. Somit liegen adäquate Maßnahmen - wieder Erhöhen des Bremsdrucks, oder weiteres Absenken des Bremsdrucks - vor, um auf die vorliegende Fahrsituation adäquat reagieren zu können und das Fahrzeug sicher zu bremsen.

Der Bremsdruck kann vorteilhaft weiter bis auf einen Minimalwert reduziert werden, wobei insbesondere der Minimalwert einer Amplitude der aufgeprägten Druckcharakteristik entspricht. Auf diese Weise kann gewährleistet werden, dass kein unzulässig niedriger Bremsdruck im System eingestellt wird. Ferner kann gewährleistet werden, dass die Druckcharakteristik weiterhin im vollen Umfang aufgeprägt werden kann.

Falls innerhalb eines vorgegebenen zweiten Zeitintervalls die Verzögerungscharakteristik im Verzögerungssignal immer noch nicht wieder vorhanden ist, wird in vorteilhafter Manier ein Druck-Festwert eingestellt wird. Dies verhindert, dass das Fahrzeug zu lange mit abgesenktem Bremsdruck weiter fährt und erhöht dadurch die Sicherheit des Bremsvorgangs. Nach einer gewissen Zeit wird somit ein Sicherheitsbremsdruck eingestellt.

In vorteilhafter Weise wird, wenn die Verzögerungscharakteristik nach dem ersten Absenken des Bremsdrucks wieder vorhanden ist, der Bremsdruck solange erhöht, bis die Verzögerungscharakteristik erneut nicht mehr vorhanden ist, bis der ursprüngliche Sollbremsdruck erreicht ist oder bis ein neu vorgegebener Sollbremsdruck erreicht ist. Dadurch kann das Verfahren an neue Fahrsituationen und gegebenenfalls veränderte Bremsvorgaben angepasst werden.

In vorteilhafter Weise erfolgt das Aufprägen der Druckcharakteristik durch eine Modulation des Bremsdrucks mittels des ersten Bremsdruckerzeugers. Der im Bremssystem vorhandene Bremsdruckerzeuger kann zum Aufprägen der Druckcharakteristik verwendet werden. Das Erzeugen einer Druckcharakteristik ist in einfacher Weise möglich, wenn der erste Bremsdruckerzeuger ein steuerbarer Bremskraftverstärker oder ein weiterer Bremsdruckerzeuger ist, vorausgesetzt er kann den Bremsdruck im Bremssystem steuern oder einstellen.

In Ausgestaltung ist die Modulation des Bremsdrucks eine zyklische Modulation, insbesondere eine zyklische Modulation mit einer festen Frequenz und/oder einer festen Amplitude. Durch Vorsehen einer Druckcharakteristik in Form einer Modulation mit einer festen Frequenz und/oder Amplitude kann eine der Druckcharakteristik entsprechende Verzögerungscharakteristik leicht im Verzögerungssignal ausgemacht und überwacht werden.

Vorteilhaft ist ferner, dass die Verzögerungscharakteristik in Form einer Frequenz des Verzögerungssignals vorliegt, wobei die Frequenz der Verzögerungscharakteristik der Frequenz der Druckcharakteristik im Wesentlichen entspricht. Alternativ oder zusätzlich kann die Verzögerungscharakteristik in Form einer Amplitude des Verzögerungssignals vorliegen, oder in Form einer Amplitudenänderung des Verzögerungssignals. Somit kann die Verzögerungscharakteristik auf einfache Weise in Zusammenhang mit der aufgeprägten Druckcharakteristik gebracht werden. Ebenso kann eine Amplitude oder eine Amplitudenänderung einfach erkannt werden und so ein Signal auf das Vorhandensein einer Verzögerungscharakteristik überwacht werden.

In Ausgestaltung der Erfindung unterbleibt das Aufprägen der Druckcharakteristik oder wird das Aufprägen unterbrochen, wenn die Fahrzeuggeschwindigkeit unter einem Geschwindigkeitsgrenzwert liegt oder gelangt, insbesondere, wenn sich das Fahrzeug im Stillstand befindet. Eine Modulation des Bremsdrucks kann unterhalb eines bestimmten Grenzwerts nicht mehr im Verzögerungssignal erkannt werden, weshalb auch eine Modulation des Bremsdrucks unterbunden wird.

In vorteilhafter Ausgestaltung umfasst das hydraulische Bremssystem einen weiteren Bremsdruckerzeuger. Mit dem Aufprägen einer Druckcharakteristik mittels des ersten Bremsdruckerzeugers wird dann begonnen, wenn ein Ausfall des weiteren Bremsdruckerzeugers vorliegt. Dadurch ist ein redundantes Bremssystem gegeben, welches eine weitere Möglichkeit gibt unabhängig vom zweiten Bremsdruckerzeuger, in der Regel einer ESP/ ABS -Einheit, auf blockierende Räder zu reagieren. Auf diese Weise wird das vorliegende Bremssystem der Anforderung einer möglichen sicheren Abbremsung bei autonomem/semiautomatisiertem Fahren durch Ausnutzung der Hardware-Redundanz zur aktiven Bremsdruckerzeugung, einerseits mit dem ersten Bremsdruckerzeuger (Bremskraftverstärker) und anderseits mittels des zweiten Bremsdruckerzeuges (ESP/ABS-System) gerecht.

Ein Defekt des weiteren Bremsdruckerzeuger -beispielsweise in Form einer Modulationseinheit zur Modulation des Radbremsdrucks - kann in Form eines Defekts in Komponenten der Modulationseinheit vorliegen. Fällt die Modulationseinheit ganz oder zumindest teilweise aus, so kann die Funktionalität durch den ersten Bremsdruckerzeuger übernommen werden, was wiederum die Sicherheit erhöht.

In Ausgestaltung der Erfindung ist das Verzögerungssignal ein Signal welches direkt die Verzögerung des Fahrzeugs repräsentiert oder eine zeitliche Ableitung der Verzögerung des Fahrzeugs. Dadurch sind zwei Signale verfügbar, die in der Lage sind die Verzögerungscharakteristika aufzuweisen und können getrennt aber auch gemeinsam zur Überwachung in Bezug auf die Verzögerungscharakteristik verwendet werden, was die Genauigkeit erhöht und wiederum einer Redundanz im System erzeugt.

Das Verfahren wie im Vorigen geschildert kann mittels eines Steuergeräts durchgeführt werden, welches Mittel zur Durchführung des Verfahrens nach wenigstens einem der Ansprüche 1 - 16 aufweist.

### Zeichnungen

Figur 1 zeigt eine schematische Darstellung des Verfahrens.
Figur 2 zeigt eine schematische Darstellung eines hydraulischen Bremssystems.
Figur 3 zeigt eine schematische Darstellung des Steuergeräts sowie der dazugehörigen Signale.
Figuren 4 - 6 zeigen typische Signalverläufe von Radgeschwindigkeiten, des Drucksignals, des Verzögerungssignals, sowie des Rucks, der ersten zeitlichen Ableitung des Verzögerungssignals.

### Ausführungsformen der Erfindung

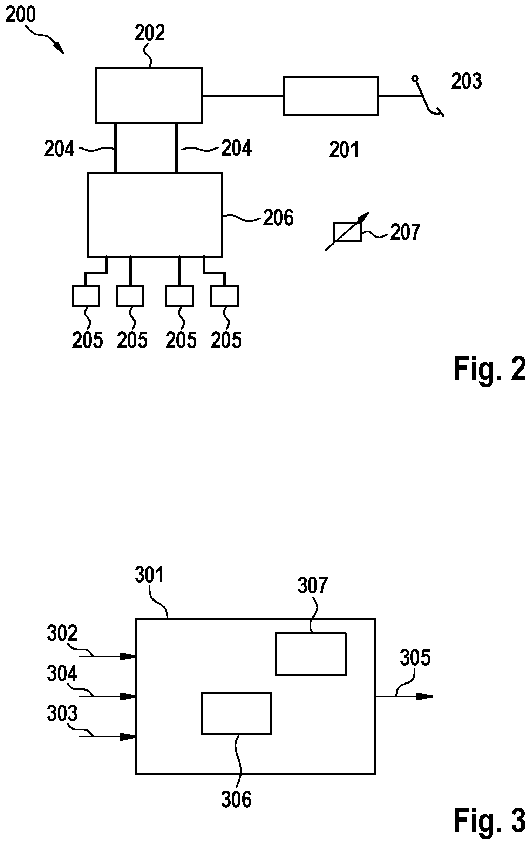

Zuerst wird das Bremssystem 200 beschrieben, welches in Figur 2 dargestellt ist. Das Bremssystem umfasst wenigstens einen Radbremszylinder 205, welcher hydraulisch mit Bremsdruck beaufschlagt werden kann. Durch den Druckaufbau im Radbremszylinder 205 kann in bekannter Weise eine Verzögerung des entsprechenden Rads erreicht werden.

Das hydraulische Bremssystem 200 umfasst ferner einen Bremskraftverstärker 201, welcher ein Kraftdruckumwandlungselement 202 mit einer Kraft beaufschlagen kann. Ein solches Kraftdruckumwandlungselement kann in Form eines Hauptbremszylinders 202 vorliegen. Bekannte Hauptbremszylinder weisen beispielsweise zwei Druckkammern auf.

Der Bremskraftverstärker 201 ist in der Lage eigenständig die Ausgangskraft des Bremskraftverstärkers 201 einzustellen. Dies kann beispielsweise durch eine Veränderung des Verstärkungsfaktors des Bremskraftverstärkers 201 erfolgen. Ändert der Bremskraftverstärker seine Ausgangskraft, so wird auch der Hauptbremszylinder 202 mit einer anderen Kraft beaufschlagt, so dass in den Kammern des Hauptbremszylinders 202 ein anderer Druck eingestellt wird.

Auf diese Weise kann der Bremskraftverstärker als ein erster Bremsdruckerzeuger 201 verstanden werden. Der Bremskraftverstärker 201 hat darüber hinaus die Eigenschaft steuerbar zu sein. Unter steuerbar ist zu verstehen, dass die Ausgangskraft des Bremskraftverstärkers verändert werden kann, beispielsweise durch ein entsprechendes Steuergerät. Ein solcher Bremskraftverstärker kann ein elektromechanischer, elektromagnetischer, elektrohydraulischer oder auch steuerbarer pneumatischer Bremskraftverstärker sein.

Der Bremskraftverstärker kann ferner eine Ankopplungsmöglichkeit für ein Bremspedal 203 aufweisen, sodass ein Fahrer durch Betätigung des Bremspedals zusätzlich zum Bremskraftverstärker 201 einen Druckaufbau im hydraulischen Bremssystem bewirken kann. Es muss betont werden, dass dies jedoch nicht zwingend erforderlich ist. Ebenso sind hydraulische Bremssysteme denkbar, bei denen Bremskraftverstärkung und Pedalbetätigung separat vorhanden sind, insbesondere Systeme, bei denen der Fahrer über das Bremspedal - zumindest im Normalbetrieb - nicht zum Bremsdruckaufbau beiträgt sondern vielmehr einen Pedalsimulator betätigt.

Die wenigstens eine Druckkammer des Hauptbremszylinders 202 steht in hydraulischer Verbindung mit den Radbremszylindern 205. Diese hydraulische Verbindung erfolgt über Hydraulikleitungen 204. Die Anzahl der hydraulischen Leitungen 204 hängt von der Anzahl der Druckkammern des Hauptbremszylinders ab. Im in Figur 2 gezeigten Beispiel sind zwei Hydraulikleitungen 204 gezeigt, welche zwei Druckkammern des Hauptbremszylinders 202 zugeordnet sind. Zwischen Hauptbremszylinder 202 und den Radbremszylindern 205 kann sich eine Modulationseinheit 206 befinden. Eine solche Modulationseinheit kann in Form eines ABS und/oder ESP Hydraulikaggregats vorliegen. Derartige Modulationseinheiten sind in der Lage Radbremsdruck an einzelnen Radbremszylindern 205 zu modulieren, insbesondere zu erhöhen oder abzusenken. Eine solche Modulationseinheit kann als weiterer oder als zweiter Bremsdruckerzeuger 206 verstanden werden.

Das hydraulische Bremssystem 200 umfasst ferner einen Geber 207, welcher in der Lage ist ein Verzögerungssignal 303 des Fahrzeugs auszugeben. Ein Verzögerungssignal 303 kann beispielsweise eine Spannung oder ein Strom sein, dessen Höhe einer aktuell vorliegenden Verzögerung des Fahrzeugs entspricht. Ebenso könnte der Geber 207 ein Signal ausgeben welches proportional zur zeitlichen Ableitung der Verzögerung ist.

Im Folgenden wird eine Ausführungsform des Verfahrens beschrieben.

Es soll davon ausgegangen werden, dass im Bremssystem ein ursprünglicher Sollbremsdruck bereits eingestellt ist.

Im ersten Schritt 1 des Verfahrens wird mittels des ersten Bremsdruckerzeugers 201 eine Druckcharakteristik auf den ursprünglichen Sollbremsdruck aufgeprägt. Unter dem Aufprägen einer Druckcharakteristik auf den ursprünglichen Sollbremsdruck kann eine Modulation des Bremsdrucks durch den ersten Bremsdruckerzeuger 201 verstanden werden. Eine solche Modulation erfolgt beispielsweise durch eine Änderung der seitens des ersten Bremsdruckerzeugers bereitgestellten Ausgangskraft. Durch die Modulation der Ausgangskraft des Bremsdruckerzeugers 201 wird der Bremsdruck im hydraulischen Bremssystem 200 entsprechend moduliert. Im Fall eines Bremskraftverstärkers 201 beaufschlagt dieser einen Hauptbremszylinder 202 mit der Ausgangskraft.

Eine solche Modulation des Bremsdrucks kann eine zyklische Modulation sein. Unter einer zyklischen Modulation kann verstanden werden, dass der Bremsdruck in einem regelmäßigen Ablauf erhöht und wieder abgesenkt wird. Die Modulation kann zyklisch mit einer vorgegebenen Frequenz erfolgen. Eine Realisierung einer zyklischen Modulation kann beispielsweise in Form einer sinusförmigen Veränderung der Ausgangskraft des ersten Bremsdruckerzeugers, beispielsweise des Bremskraftverstärkers 201 erfolgen.

Eine solche Modulation kann beispielsweise mittels einer Frequenz von unter 10 Hz erfolgen, insbesondere mit einer Frequenz kleiner oder gleich 7 Hz. Besonders Vorteilhaft hat sich erwiesen Frequenzen von 3 Hz oder 6 Hz zu verwenden, da sich diese Frequenzen von anderen Frequenzen trennen lassen, die beispielsweise durch die Achsschwingfrequenzen des Fahrzeugs hervorgerufen werden, die typischerweise im Bereich größer 8 Hz liegen. Die Amplitudenhöhe der Modulation des Bremsdrucks wird so gewählt, dass das Fahrzeug eine messbare Reaktion im Verzögerungssignal 303 aufweist.

Anders ausgedrückt erzeugt eine zyklische Modulation der Ausgangskraft des Bremsdruckerzeugers 201 eine Druckcharakteristik, bei der der Bremsdruck ebenfalls zyklisch verändert wird.

Ein in wenigstens einem Radbremszylinder 205 des hydraulischen Bremssystems 200 vorherrschender Bremsdruck bewirkt in bekannter Weise ein Bremsmoment, welches eine Verzögerung des Fahrzeugs bewirkt. Das Maß der Verzögerung ist mittels eines Gebers 207 messbar. Ein solcher Geber 207 kann ein Beschleunigungssensor sein, der die vorherrschende Bremsverzögerung ermitteln kann.

Der Geber 207 erzeugt ein zur Verzögerung des Fahrzeugs korrespondierendes Verzögerungssignal. Wie bereits dargestellt führt ein Bremsdruck zu einer Verzögerung. Ebenso führt eine Modulation des Bremsdrucks zu einer Modulation der Fahrzeugverzögerung. Diese Modulation ist mittels des Gebers 207 in Form eines Verzögerungssignals messbar.

Die dem Bremsdruck aufgeprägte Druckcharakteristik kann im Verzögerungssignal als Verzögerungscharakteristik erkannt werden. Ein solches Erkennen kann dadurch erfolgen, dass eine Frequenz der Druckcharakteristik, insbesondere der Modulation des Bremsdrucks im Wesentlichen im Verzögerungssignal erkannt werden kann.

In einem weiteren Schritt des Verfahrens 2 wird das Verzögerungssignal auf das Vorhandensein einer der Druckcharakteristik entsprechenden Verzögerungscharakteristik überwacht. Wird die Charakteristik beispielsweise in Form einer Frequenz überwacht so kann ein Überwacher prüfen, ob das Verzögerungssignal eine gewisse Frequenz aufweist, oder nicht und ein entsprechendes Signal erzeugen. Neben einer Überwachung auf das Vorhandensein einer Frequenz ist natürlich eine Überwachung eines bestimmten Frequenzbands möglich. Alternativ oder zusätzlich kann eine Amplitude des Verzögerungssignals überwacht werden. Die Überwachung der Amplitude kann in Bezug auf eine Amplitudenänderung erfolgen.

In Ausgestaltung des Verfahrens kann ein zu überwachendes Frequenzband des Verzögerungssignals so gewählt werden, dass es der Frequenz der Druckcharakteristik im Wesentlichen entspricht.

Wird das Vorhandensein der Verzögerungscharakteristik im Verzögerungssignal festgestellt, so wird in Schritt 3 der ursprüngliche Sollbremsdruck beibehalten. Das Aufprägen der Druckcharakteristik wird fortgeführt.

Das Verfahren verläuft weiter in Schritt 1.

Wird ein Fehlen der Verzögerungscharakteristik des Verzögerungssignals festgestellt, so wird in Schritt 4 der ursprüngliche Sollbremsdruck angepasst. Eine Anpassung erfolgt durch ein Absenken des Bremsdrucks.

Beim Absenken des Bremsdrucks wird weiterhin eine Druckcharakteristik durch den ersten Bremsdruckerzeuger 201 aufgeprägt. Ein Fehlen der Verzögerungscharakteristik kann darin bestehen, dass die Frequenz der Druckcharakteristik im Verzögerungssignal nicht mehr zu erkennen ist. Ferner kann ein Fehlen der Verzögerungscharakteristik dadurch ermittelt werden, dass eine Veränderung der Amplitude in der Verzögerungscharakteristik erkannt wird.

Ein Absenken des Bremsdrucks kann dadurch erfolgen, dass der ursprüngliche Sollbremsdruck um einen vorgegebenen Druckwert reduziert wird. Der vorgegebene Druckwert um den reduziert werden soll, kann entweder fest hinterlegt sein, oder auch in einer Wertetabelle oder Wertematrix, in der verschiedene Fahrsituationen, abhängig von Fahrparametern (Geschwindigkeit, Beschleunigung, Verzögerung, Steigung, Lenkwinkel) oder Umgebungswerten (Temperatur, Fahrbahnbeschaffenheit), ein vorgegebener Druckwert zugeordnet ist hinterlegt sein. Das Absenken des Bremsdrucks erfolgt ebenfalls mittels des ersten Bremsdruckerzeugers 201, beispielsweise mittels des Bremskraftverstärkers 201. Eine mögliche Realisierung einer Druckabsenkung, die jedoch klar vom vorliegenden Bremssystem und Fahrzeugtyp abhängt, kann im Bereich einer Absenkung um 40 % des aktuellen mittleren Druckwertes liegen.

Es kann dabei beispielsweise um mindestens 15 bar abgesenkt werden, jedoch nur bis zu einer bestimmten Untergrenze, welche im Wesentlichen der Amplitude der Druckmodulation entspricht.

Nach dem Absenken des Bremsdrucks um den vorgegebenen Druckwert wird in Schritt 5 überwacht, ob innerhalb eines vorgegebenen ersten Zeitintervalls das Verzögerungssignal die der Druckcharakteristik entsprechende Verzögerungscharakteristik wieder aufweist. Das vorgegebene Zeitintervall kann im Bereich von mehreren Modulationszyklen liegen, insbesondere von 1 -2 Modulationszyklen.

Wird innerhalb des vorgegebenen Zeitintervalls festgestellt, dass die Verzögerungscharakteristik im Verzögerungssignal wieder vorhanden ist, so wird im Schritt 6 der Bremsdruck wieder auf den aktuell vorliegenden Sollbremsdruck des Bremssystems zurückgeführt. Dieser Sollbremsdruck kann entweder der anfänglich vorhandene Sollbremsdruck des Bremssystems sein, alternativ aber auch ein neuer davon abweichender Sollbremsdruck. Das Aufprägen einer Druckcharakteristik durch den ersten Bremsdruckgeber 201 wird dabei fortgeführt. Das Verfahren startet dann wieder in Schritt 1 mit der Überwachung des Verzögerungssignals.

In Schritt 7 wird für den Fall, dass das Verzögerungssignal die Verzögerungscharakteristik innerhalb des ersten Zeitintervalls nicht aufweist der Bremsdruck weiter reduziert. Eine Druckcharakteristik wird weiter auf den Bremsdruck bei der Absenkung desselben aufgeprägt.

Die weitere Reduktion des Bremsdrucks kann bis zu einem Minimalwert, also bis zu einem minimalen Druck erfolgen. Der minimale Druck kann einer Amplitude der Druckcharakteristik entsprechen. Während des Absenkens wird das Verzögerungssignal weiter auf die Verzögerungscharakteristik hin überwacht.

In Schritt 8 wird für den Fall, dass nach oder während dem weiteren Absenken des Bremsdrucks immer noch keine Verzögerungscharakteristik vorhanden ist, ein vorgegebener Bremsdruck eingestellt. Dieser vorgegebene Bremsdruck kann auch als Druck-Festwert verstanden werden. Das Einstellen eines solchen Druck-Festwerts garantiert, dass der Bremsdruck nicht vollständig auf den Minimalwert abgebaut verbleibt, sondern wieder eine Bremswirkung im Bremssystem vorhanden ist. Dies ist eine Eigenschaft, die die Sicherheit des hydraulischen Bremssystems erhöht.

Die Druckerhöhung auf den Druck-Festwert kann nach einem vorgegebenen zweiten Zeitintervall erfolgen. Das vorgegebene zweite Zeitintervall liegt in der Größenordnung von Sekunden, insbesondere von 1.5 - 2 Sekunden.

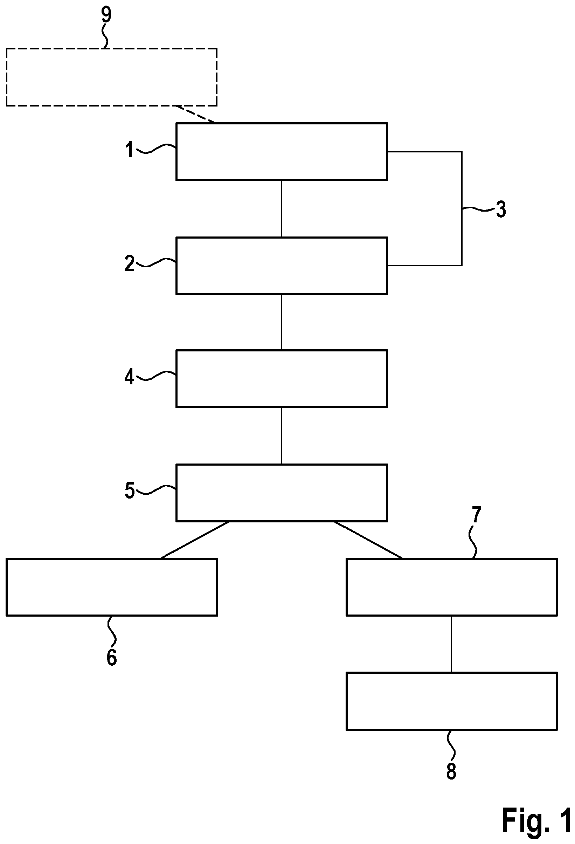

In alternativer Ausgestaltung (nicht in Figur 1 dargestellt) kann auch der Bremsdruck kontinuierlich abgesenkt werden, wobei während des Absenkens die Druckcharakteristik weiter aufgeprägt wird. Die Absenkung kann so lange erfolgen, bis das weiterhin überwachte Verzögerungssignal die Verzögerungscharakteristik wieder aufweist. Ebenso denkbar ist eine Absenkung bis ein minimal zulässiger Druckwert erreicht ist.

Den Schritten 1 - 8 kann ein Schritt 9 vorgelagert sein, der das Verfahren initiiert. Schritt 9 kann das Feststellen eines Defekts in einer Modulationseinheit 206 des hydraulischen Bremssystems 200 umfassen. Wird ein solcher Defekt festgestellt, beispielsweise ein Ausfall im Hydraulikaggregat der Modulationseinheit 206, in zugeordneten Sensoren oder Signalleitungen, so kann keine fahrzeugstabilisierende Regelung mit der Modulationseinheit 206 mehr erfolgen.

In Figur 3 ist ein Steuergerät 301 schematisch dargestellt. Unter einem Steuergerät kann auch ein Steuergerätemodul verstanden werden, es ist nicht erforderlich, dass für das durchgeführte Verfahren ein komplett eigenständiges Steuergerät vorhanden sein muss. Ebenso kann eine Untereinheit eines bereits vorhandenen Steuergeräts des hydraulischen Bremssystems 200 die Schritte des Verfahrens - ganz oder zumindest anteilig - durchführen. Ein solches Steuergerät 301 kann ein Steuergerät des zweiten Bremsdruckerzeugers, insbesondere der Modulationseinheit 206 sein. Ebenso kann das Steuergerät 301 ein Steuergerät des ersten Bremsdruckerzeugers, insbesondere des Bremskraftverstärkers 201 sein. Ebenso können Teilfunktionen zwischen Bremsdruckerzeuger-Steuergerät und Modulationseinheit-Steuergerät verteilt sein. So kann es durchaus sinnvoll sein, die Ansteuerung des Bremskraftverstärkers zum Aufprägen der Druckcharakteristik durch das Bremskraftverstärker-Steuergerät vorzunehmen, während dagegen das Verzögerungssignal seitens des Modulationseinheit-Steuergeräts zu überwachen. Die Steuergeräte können dabei per Funk oder auch kabelgebunden über CAN oder BUS-Systeme miteinander kommunizieren.

Im Folgenden wird der Einfachheit von einem Steuergerät 301 ausgegangen.

Das Steuergerät 301 ist in der Lage Signale zu empfangen. Ein erstes Signal 302 repräsentiert einen Fehler in der Modulationseinheit 206. Ein solcher Fehler kann in Form von defekten Komponenten der Modulationseinheit 206, insbesondere des Hydraulikaggregats der Modulationseinheit 206 bestehen. Ein Fehler kann auch in defekten zugeordneten Sensoren oder Signalleitungen zu solchen Sensoren vorliegen. Die Sensoren können Drehzahlfühler an den Rädern des Fahrzeugs sein.

Das Steuergerät 301 ist in der Lage ein Verzögerungssignal 303 zu empfangen. Das Verzögerungssignal 303 wird vom Geber 207 zur Verfügung gestellt, entweder direkt oder indirekt.

Das Steuergerät überwacht das Verzögerungssignal 303 auf das Vorhandensein der Verzögerungscharakteristik wie bereits geschildert.

Das Steuergerät umfasst dazu einen Überwacher 306. Mittels des Überwachers 306 des Steuergeräts 301 wird das Verzögerungssignal überwacht. Wie bereits beschrieben kann der Überwacher 306 das Verzögerungssignal 303 auf mindestens eine gewisse Frequenz, Amplitude und/oder Amplitudenänderung hin überwachen. Ebenso kann auf mindestens ein Frequenzband überwacht werden. Der Überwacher 306 kann auch die Frequenz zur Verfügung gestellt bekommen (nicht eingezeichnet) mittels der die Druckcharakteristik durch den Bremskraftverstärker 201 aufgeprägt wird. Auf diese Weise kann die passende Frequenz oder das passende Frequenzband überwacht werden.

Das Steuergerät 301 stellt auch ein Steuersignal 305 zur Verfügung welches zur Ansteuerung des Bremskraftverstärkers 201 verwendet wird. Dieses kann direkt oder indirekt über ein weiteres Steuergerät den Bremskraftverstärker 201 steuern.

Mittels des Steuersignals 305 des Steuergeräts 301 können, wie bereits bei den Verfahrensschritten beschrieben, beispielsweise der Bremsdruck gehalten werden, der Bremsdruck abgesenkt werden oder der Bremsdruck wieder angehoben werden. Die dazu nötigen Steuersignale können im Steuersignal 305 beinhaltet sein. Unter dem einzustellenden Bremsdruck kann auch der aktuell vorgesehene Sollbremsdruck des Bremssystems verstanden werden.

Das Steuergerät 301 umfasst ferner einen Speicherbereich 307, in dem vorgegebene Größen des Verfahrens abgelegt sind. Vorgegebene Größen können in Form:
- einer einzustellenden Frequenz für die Druckcharakteristik,
- eines vorgegebenen Druckwerts für die Absenkung des Bremsdrucks
- eines vorgegebenen ersten Zeitintervalls, und/oder
- eines vorgegebenen zweiten Zeitintervalls
   hinterlegt sein.

Dem Steuergerät 301 kann ein Stillstandssignal 304 zur Verfügung gestellt werden, welches anzeigt, dass das Fahrzeug sich im Stillstand befindet, oder zumindest unterhalb einer gewissen Geschwindigkeit. Dieses Stillstandssignal 304 kann dazu verwendet werden, das Verfahren abzubrechen. Unter Abbruch ist zu verstehen, dass die Druckcharakteristik nicht mehr aufgeprägt wird und/oder das Verzögerungssignal nicht mehr überwacht wird. Eine aufgeprägte Druckcharakteristik wird im Stillstand - oder zumindest unterhalb einer gewissen Geschwindigkeit - nicht mehr im Verzögerungssignal erkennbar sein, daher kann ein Abbruch des Verfahrens notwendig sein.

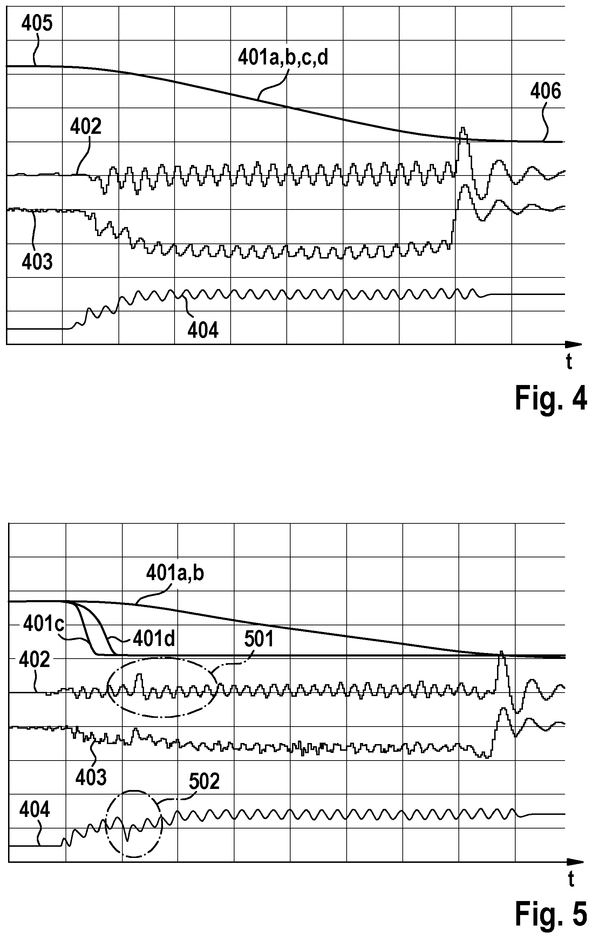

Figur 4 zeigt vier Signalverläufe. Ein erster Signalverlauf 401 zeigt Raddrehzahlen von vier Rädern des Kraftfahrzeugs. Die Raddrehzahlen sind in den Figuren 4 - 6 nur zu Verständniszwecken dargestellt; sie sind nicht Teil des Regelkreises.

Raddrehzahlen können auch als Radgeschwindigkeiten verstanden werden. Eine Unterscheidung der vier Radgeschwindigkeiten 401a, b, c, d ist anfangs in den Zeichnungen nicht sichtbar, da in diesem Fall einer vorliegenden Bremsung sämtliche Räder nicht blockieren und die gleichen Radgeschwindigkeiten aufweisen. Die Signale verlaufen im Wesentlichen gleich. Anhand der Signalverläufe 401a - d ist zu erkennen, dass sämtliche Radgeschwindigkeiten von einem Anfangsniveau 405 bis zu einem Endniveau 406 abgesenkt werden. 406 kann beispielsweise eine Radgeschwindigkeit repräsentieren, die dem Stillstand des Fahrzeugs entspricht. Sämtliche Signalverläufe sind auf der Achse des Diagramms von links nach rechts mit zunehmender Zeit t dargestellt.

Das Signal 403 repräsentiert die vorliegende Fahrzeugverzögerung. Aufgezeichnet ist diese hier als Beschleunigung. Beschleunigung und Verzögerung sind jedoch korrelierte Größen, wobei die Verzögerung die negative Beschleunigung ist. Die Fahrzeugverzögerung nimmt mit der Zeit von einem ersten Niveau zu, wobei entsprechend das Verzögerungssignal 403 abnimmt.

Das Signal 404 zeigt den Signalverlauf eines Radbremsdrucks. Der Radbremsdruck wird moduliert. Dies ist im Signalverlauf 404 zu erkennen. Der Radbremsdruck steigt im Verlauf der vorliegenden Bremsung von einem ersten Niveau mit der Zeit an. Der Radbremsdruck 404 zeigt eine vorherrschende Modulation, welche dem Radbremsdruck aufgeprägt ist. Diese Modulation ist im Fahrzeugverzögerungssignal 403 ebenfalls zu erkennen, hier in Form einer sinusförmigen Modulation.

Ein weiteres Signal 402 zeigt den sogenannten Ruck. Der Ruck entspricht einer Ableitung der Fahrzeugverzögerung. Unter einer Ableitung ist eine zeitliche Ableitung (d/dt) der Fahrzeugverzögerung zu verstehen. Da die Fahrzeugverzögerung die besagte Modulation aufweist, ist durch Bilden der zeitlichen Ableitung der Fahrzeugverzögerung eine Modulation auch im Ruck zu erkennen. Der in Figur 4 dargestellte Bremsverlauf entspricht einer normalen Bremsung, beispielsweise bei trockenem Asphalt.

Sowohl das reine Verzögerungssignal 403, als auch das Signal des Fahrzeugrucks 402 können als Verzögerungssignal verstanden werden, welches auf die Verzögerungscharakteristik - wie oben beschrieben - hin überwacht wird.

Figur 5 zeigt dagegen eine andersartige Bremsung. Zu Beginn der Bremsung sind sämtliche Radgeschwindigkeiten 401 a-d auf gleichem Niveau. Dann tritt eine Situation ein, in denen zwei der Räder beginnen zu blockieren. Eine Blockade der Räder kann durch eine Abnahme der Radgeschwindigkeit erkannt werden. Insbesondere kann eine Abnahme der Radgeschwindigkeiten auf Null erkannt werden. Signalverläufe 401c und 401d zeigen eine derartige Abnahme der Radgeschwindigkeiten von zwei entsprechenden Rädern.

Auf dem Signal des Rucks 402 kann bei blockierenden Rädern eine Verzögerungscharakteristik 501 erkannt werden. Eine Verzögerungscharakteristik 501 kann in Form einer geringeren Amplitude - im Vergleich zu einer erwarteten Amplitude bei einer regulären Bremsung - des Rucksignals 402 verstanden werden. Weitere charakteristische Änderungen des Verzögerungssignals, also des Rucksignals 402 in diesem Fall, welches einer zeitliche Ableitung des Verzögerungssignals 403 entspricht, können ebenfalls zum Erkennen einer Situation, welche blockierenden Rädern entspricht, zugeordnet werden.

Wird eine Verzögerungscharakteristik 501 erkannt, so wird der Radbremsdruck abgesenkt. Ein Absenken des Radbremsdrucks ist im Raddrucksignal zu erkennen, in Figur 5 im markierten Bereich 502.

In einer alternativen weiteren Ausführungsform kann vorgesehen sein, ein Absenken des Radbremsdrucks an ein weiteres Absenkkriterium zu koppeln. Die aktuell in der Fahrsituation vorherrschende Fahrstabilität kann ein Absenkkriterium darstellen.

Nach einer Reduktion des Radbremsdrucks - erkennbar im Signal des Radbremsdrucks 404 im Bereich 502 - wird der Radbremsdruck wieder hochgefahren. Es kann vorgesehen sein, dass bei Erkennen einer Verzögerungscharakteristik 501 verbunden mit einer Reduktion des Radbremsdrucks eine Vorgabe einer neuen Gesamtsollverzögerung vorgenommen wird. Diese Vorgabe kann in Form eines neu einzustellenden Sollbremsdrucks erfolgen. Am Signalverlauf 404 ist auch zu erkennen, dass bei einer Absenkung des Radbremsdrucks die Modulation des Radbremsdrucks fortgeführt wird.

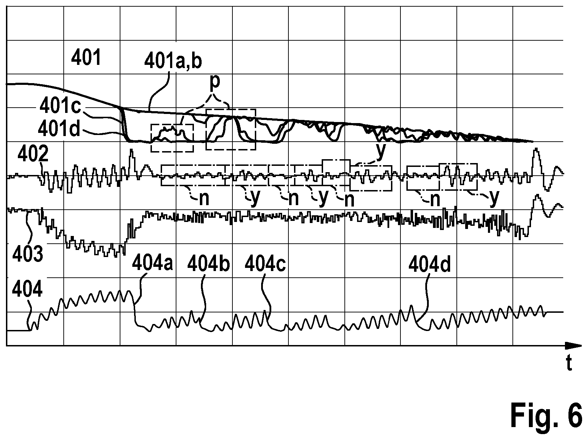

Figur 6 zeigt eine weitere Bremsung. Bei dieser Bremsung findet ein Übergang von einer beispielsweise trockenen Strecke auf eine glatte Strecke, insbesondere eine eisige oder nasse Strecke statt.

Zu Beginn der Bremsung ist zu erkennen, dass im Signalverlauf 401 die Radgeschwindigkeiten aller beteiligter Räder den gleichen Verlauf haben. Der Radbremsdruck 404 steigt an und weist - wie bereits beschrieben - die Modulation auf. Die Fahrzeugverzögerung nimmt zu, zu sehen im Signalverlauf des Verzögerungssignals 403. Das der Verzögerung entsprechende Signal 403 zeigt ebenfalls die Modulation. Des Weiteren zeigt das Signal des Rucks 402 auch die Modulation. Wie bereits gesagt ist der Ruck 402 die zeitliche Ableitung des Verzögerungssignals 403. Gelangt das Fahrzeug auf eine glatte Fläche, so können einzelne Räder blockieren. Dies ist zu erkennen an den Radgeschwindigkeitssignalen 401c und 401d, welche den ursprünglichen Wert der Radgeschwindigkeit bei der Bremsung verlassen und wie hier gezeigt beispielsweise auf Null gehen. Die anderen Radgeschwindigkeitssignale 401 a und b bleiben beim erwarteten Verlauf. Wie bereits geschildert ist eine Blockade einzelner Räder auch daran zu erkennen, dass sich die Verzögerungscharakteristik verändert. Wird die Verzögerungscharakteristik anhand des Signals des Rucks 402 überwacht, so kann das Signal in Bereiche unterteilt werden, in denen eine Charakteristik vorhanden ist, sowie in Bereiche, in denen die Charakteristik nicht vorhanden ist. Im Signal 402 sind Bereiche markiert mit dem Buchstaben **n,** in denen die Verzögerungscharakteristik nicht zu erkennen ist. Ebenso sind Bereiche markiert mit dem Buchstaben **y,** in denen die Verzögerungscharakteristik wieder sichtbar ist.

Ein Vorhandensein einer Frequenz und/oder Amplitude, sowie der Änderung der Amplitude kann zur Überwachung auf das Vorhandensein der Verzögerungscharakteristik herangezogen werden. Die Bereiche **y** und **n** können sich in der Frequenz und/oder Amplitude, sowie der Änderung der Amplitude unterscheiden.

Immer wenn die Verzögerungscharakteristik in Signal 402 nicht mehr vorhanden ist, wird der Radbremsdruck reduziert. Dies ist beispielhaft im Signal 404 an den Stellen 404a, 404b, 404c und 404d zu erkennen. Ist im Signal des Rucks 402 die Verzögerungsscharakteristik wieder zu erkennen (Bereiche **y**), wird der Radbremsdruck wieder erhöht und die Modulation aufgeprägt. Dies ist anhand des Signals 404 in den Bereichen zwischen den Stellen 404 a, b, c, und d zu erkennen. Situationen, in denen das Rucksignal 402 wieder eine Verzögerungscharakteristik aufweist (Markierungen **y**), können Fahrsituationen zugeordnet werden, in denen die Räder nicht mehr blockieren. Dies ist beispielsweise im Radgeschwindigkeitssignal 401 an den mit **p** markierten Stellen der Fall.

Es ist ebenso möglich, das Verzögerungssignal 403 anstatt des Signals des Rucks 402 zur Analyse der vorliegenden Fahrsituationen zu verwenden. Wenn das Verzögerungssignal starke Veränderungen aufweist, so kann auch dieses als Indiz für beispielsweise blockierende Räder herangezogen werden. Ebenso ist es möglich, Verzögerungssignal 403 sowie Signal des Rucks 402 zusammen zu überwachen, um ein besseres Verständnis für die vorliegende Fahrsituation zu erlangen.

In den Figuren 4, 5 und 6 lässt sich ebenfalls erkennen, dass bei nicht mehr vorliegender Radgeschwindigkeit, also bei einem Stillstand des Fahrzeugs bzw. bei einem fast Stillstand des Fahrzeugs, die Druckmodulation auf dem vorliegenden Radbremsdruck beendet wird. Dies sieht man beim rechts auslaufenden Drucksignal 404, welches die vorliegende Modulation nicht mehr zeigt.

Fahrsituationen, in denen einzelne Räder des Fahrzeugs blockieren, können durch Überwachung der Verzögerungscharakteristik verlässlich erkannt werden. Mittels des erfindungsgemäßen Verfahrens wird der Radbremsdruck angepasst mittels des ersten Bremsdruckerzeugers 201, also mittels des Bremskraftverstärkers. Auf diese Weise kann auch bei einem Defekt einer Modulationseinheit des Bremssystems eine sichere Bremsung des Fahrzeugs gewährleistet werden.

Es muss betont werden, dass die Verwendung der Begriffe Bremskraftverstärker und Modulationseinheit nicht als abschließend gesehen werden dürfen. Es ist ausreichend, wenn die in dieser Anmeldung beschriebenen Rollen in einem Bremssystem von zwei unterschiedlichen autarken Bremsdruckerzeugern wahrgenommen werden, also mittels eines ersten und eines zweiten Bremsdruckerzeugers. So können also sowohl eine Kombination eines klassischen Bremskraftverstärkers in Kombination mit einer ESP Hydraulikeinheit, als auch ein integriertes Bremssystem mit einem Plunger und einer zusätzlichen Bremsdruckquelle als erfindungsgemäß verstanden werden.

## Patentansprüche

1. Verfahren zur Steuerung eines hydraulischen Bremssystems (200) eines Fahrzeugs, wobei das Bremssystem (200) einen steuerbaren ersten Bremsdruckerzeuger (201) sowie einen Geber (207) für ein Verzögerungssignal (303, 402, 403) des Fahrzeugs umfasst, umfassend die Schritte:
- Aufprägen (1) einer Druckcharakteristik mittels des ersten Bremsdruckerzeugers auf einen ursprünglichen Sollbremsdruck,
- Überwachen (2) des Verzögerungssignals (303, 402, 403) auf das Vorhandensein einer der Druckcharakteristik entsprechenden Verzögerungscharakteristik, wobei
- bei Vorhandensein der entsprechenden Verzögerungscharakteristik der ursprüngliche Sollbremsdruck beibehalten wird (3), wobei die Druckcharakteristik weiter aufgeprägt wird oder wobei
- bei Fehlen der entsprechenden Verzögerungscharakteristik oder bei Veränderung der Verzögerungscharakteristik der ursprüngliche Sollbremsdruck angepasst wird, insbesondere dieser abgesenkt wird (4), wobei bei der Anpassung, insbesondere bei der Absenkung, des ursprünglichen Sollbremsdrucks die Druckcharakteristik weiter aufgeprägt wird.

2. Verfahren nach Anspruch 1, **dadurch gekennzeichnet, dass** durch das Aufprägen einer Druckcharakteristik (1) eine Änderung in der Verzögerung des Fahrzeugs hervorgerufen wird.

3. Verfahren nach einem der vorhergehenden Ansprüche, **dadurch gekennzeichnet dass**, der ursprüngliche Sollbremsdruck um einen vorgegebenen Druckwert abgesenkt wird.

4. Verfahren nach Anspruch 1 oder 3, **dadurch gekennzeichnet, dass** nach dem Absenken das Verzögerungssignal in Bezug auf die Verzögerungscharakteristik für ein vorgegebenes erstes Zeitintervall überwacht wird. (5)

5. Verfahren nach Anspruch 4, **dadurch gekennzeichnet, dass** wenn die Verzögerungscharakteristik im Verzögerungssignal innerhalb des vorgegebenen ersten Zeitintervalls wieder vorhanden ist, der Bremsdruck wieder erhöht wird, wobei insbesondere die Druckcharakteristik bei der Erhöhung des Bremsdrucks weiter aufgeprägt wird. (6)

6. Verfahren nach Anspruch 4, **dadurch gekennzeichnet, dass** wenn die Verzögerungscharakteristik im Verzögerungssignal innerhalb des vorgegebenen ersten Zeitintervalls nicht vorhanden ist, der Bremsdruck weiter reduziert wird, wobei insbesondere die Druckcharakteristik bei der Absenkung des Bremsdrucks weiter aufgeprägt wird. (7)

7. Verfahren nach Anspruch 6, **dadurch gekennzeichnet, dass** der Bremsdruck weiter bis auf einen Minimalwert reduziert wird, wobei insbesondere der Minimalwert einer Amplitude der Druckcharakteristik entspricht (7).

8. Verfahren nach Anspruch 7, **dadurch gekennzeichnet, dass** falls innerhalb eines vorgegebenen zweiten Zeitintervalls die Verzögerungscharakteristik im Verzögerungssignal nicht vorhanden ist, ein Druck-Festwert eingestellt (8) wird.

9. Verfahren nach Anspruch 6, **dadurch gekennzeichnet, dass** der Bremsdruck so lange erhöht wird,
- bis die Verzögerungscharakteristik erneut nicht mehr vorhanden ist,
- bis der ursprüngliche Sollbremsdruck erreicht ist oder
- bis ein neu vorgegebener Sollbremsdruck erreicht ist.

10. Verfahren nach Anspruch 1, **dadurch gekennzeichnet, dass** das Aufprägen der Druckcharakteristik (1) durch eine Modulation des Bremsdrucks mittels des ersten Bremsdruckerzeugers (201) erfolgt.

11. Verfahren nach Anspruch 10, **dadurch gekennzeichnet, dass** die Modulation eine zyklische Modulation ist insbesondere eine zyklische Modulation mit einer festen Frequenz und/oder einer festen Amplitude.

12. Verfahren nach Anspruch 11, **dadurch gekennzeichnet, dass** die Verzögerungscharakteristik in Form
- einer Frequenz des Verzögerungssignals vorliegt, wobei die Frequenz der Verzögerungscharakteristik der Frequenz der Druckcharakteristik im Wesentlichen entspricht,
- in Form einer Amplitude des Verzögerungssignals,
- oder in Form einer Amplitudenänderung des Verzögerungssignals.

13. Verfahren nach Anspruch 1, **dadurch gekennzeichnet, dass** das Aufprägen der Druckcharakteristik unterbleibt oder abgebrochen wird, wenn die Fahrzeuggeschwindigkeit unter einem Geschwindigkeitsgrenzwert liegt oder gelangt, insbesondere, wenn sich das Fahrzeug im Stillstand befindet.

14. Verfahren nach Anspruch 1, wobei das hydraulische Bremssystem einen weiteren Bremsdruckerzeuger (206) umfasst, und wobei mit dem Aufprägen einer Druckcharakteristik mittels des ersten Bremsdruckerzeugers (201) begonnen wird wenn ein Ausfall des weiteren Bremsdruckerzeugers vorliegt.

15. Verfahren nach Anspruch 14 **dadurch gekennzeichnet, dass** der weitere Bremsdruckerzeuger eine Modulationseinheit (206) zur Modulation des Radbremsdrucks ist, und der Ausfall ein Defekt in Komponenten der Modulationseinheit (206) darstellt.

16. Verfahren nach Anspruch 1, dass das Verzögerungssignal einer Verzögerung (403) des Fahrzeugs oder einer zeitlichen Ableitung der Verzögerung (402) des Fahrzeugs entspricht.

## Claims

1. Method for controlling a hydraulic brake system (200) of a vehicle, wherein the brake system (200) comprises a controllable first brake pressure generator (201) and a transducer (207) for a deceleration signal (303, 402, 403) of the vehicle, comprising the steps:
- applying (1) a pressure characteristic to an original setpoint brake pressure by means of the first brake pressure generator,
- monitoring (2) the deceleration signal (303, 402, 403) for the presence of a deceleration characteristic that corresponds to the pressure characteristic, wherein,
- in the presence of the corresponding deceleration characteristic, the original setpoint brake pressure is maintained (3), wherein the pressure characteristic continues to be applied, or wherein
- in the absence of the corresponding deceleration characteristic, or in the event of a change of the deceleration characteristic, the original setpoint brake pressure is adapted, in particular is reduced (4), wherein the pressure characteristic continues to be applied during the adaptation, in particular during the reduction, of the original setpoint brake pressure.

2. Method according to Claim 1, **characterized in that** a change in the deceleration of the vehicle is caused by the application of a pressure characteristic (1).

3. Method according to either one of the preceding claims, **characterized in that** the original setpoint brake pressure is reduced by a specified pressure value.

4. Method according to Claim 1 or 3, **characterized in that**, after the reduction, the deceleration signal is monitored (5) with regard to the deceleration characteristic for a specified first time interval.

5. Method according to Claim 4, **characterized in that**, if the deceleration characteristic is present again in the deceleration signal within the specified first time interval, the brake pressure is increased again, wherein, in particular, the pressure characteristic continues to be applied (6) during the increase of the brake pressure.

6. Method according to Claim 4, **characterized in that**, if the deceleration characteristic is not present in the deceleration signal within the specified first time interval, the brake pressure is reduced again, wherein, in particular, the pressure characteristic continues to be applied (7) during the reduction of the brake pressure.

7. Method according to Claim 6, **characterized in that** the brake pressure is reduced further to a minimum value, wherein, in particular, the minimum value corresponds (7) to an amplitude of the pressure characteristic.

8. Method according to Claim 7, **characterized in that**, if the deceleration characteristic is not present in the deceleration signal within a specified second time interval, a fixed pressure value is set (8).

9. Method according to Claim 6, **characterized in that** the brake pressure is increased until such time as
- the deceleration characteristic is again no longer present,
- the original setpoint brake pressure is reached or
- a newly specified setpoint brake pressure is reached.

10. Method according to Claim 1, **characterized in that** the pressure characteristic (1) is applied through modulation of the brake pressure by means of the first brake pressure generator (201).

11. Method according to Claim 10, **characterized in that** the modulation is a cyclic modulation, in particular a cyclic modulation with a fixed frequency and/or a fixed amplitude.

12. Method according to Claim 11, **characterized in that** the deceleration characteristic is
- in the form of a frequency of the deceleration signal, wherein the frequency of the deceleration characteristic substantially corresponds to the frequency of the pressure characteristic,
- in the form of an amplitude of the deceleration signal,
- or in the form of an amplitude change of the deceleration signal.

13. Method according to Claim 1, **characterized in that** the application of the pressure characteristic is omitted or terminated if the vehicle speed lies below or undershoots a speed threshold value, in particular if the vehicle is at a standstill.

14. Method according to Claim 1, wherein the hydraulic brake system comprises a further brake pressure generator (206), and wherein the application of a pressure characteristic by means of the first brake pressure generator (201) is commenced in the event of a failure of the further brake pressure generator.

15. Method according to Claim 14, **characterized in that** the further brake pressure generator is a modulation unit (206) for modulating the wheel brake pressure, and the failure is a defect in components of the modulation unit (206).

16. Method according to Claim 1, **characterized in that** the deceleration signal corresponds to a deceleration (403) of the vehicle or a time derivative of the deceleration (402) of the vehicle.

## Revendications

1. Procédé permettant de commander un système de freinage hydraulique (200) d'un véhicule, le système de freinage (200) comprenant un premier générateur de pression de freinage (201) pouvant être commandé, ainsi qu'un transmetteur (207) pour un signal de ralentissement (303, 402, 403) du véhicule, comprenant les étapes consistant à :
- appliquer (1) une caractéristique de pression au moyen du premier générateur de pression de freinage à une pression de freinage de consigne initiale,
- surveiller (2) le signal de ralentissement (303, 402, 403) quant à la présence d'une caractéristique de ralentissement correspondant à la caractéristique de pression, dans lequel
- en cas de présence de la caractéristique de ralentissement correspondante, la pression de freinage de consigne initiale est maintenue (3), la caractéristique de pression continuant à être appliquée, ou dans lequel
- en cas d'absence de la caractéristique de ralentissement correspondante ou en cas de variation de la caractéristique de ralentissement, la pression de freinage de consigne initiale est adaptée, en particulier abaissée (4), la caractéristique de pression continuant à être appliquée lors de l'adaptation, en particulier de l'abaissement, de la pression de freinage de consigne initiale.

2. Procédé selon la revendication 1, **caractérisé en ce que** l'application d'une caractéristique de pression (1) provoque une variation du ralentissement du véhicule.

3. Procédé selon l'une quelconque des revendications précédentes, **caractérisé en ce que** la pression de freinage de consigne initiale est abaissée d'une valeur de pression prédéfinie.

4. Procédé selon la revendication 1 ou 3, **caractérisé en ce qu'**après l'abaissement, le signal de ralentissement est surveillé (5) concernant la caractéristique de ralentissement pendant un premier intervalle de temps prédéfini.

5. Procédé selon la revendication 4, **caractérisé en ce que** la pression de freinage est à nouveau augmentée lorsque la caractéristique de ralentissement est présente dans le signal de ralentissement à l'intérieur du premier intervalle de temps prédéfini, en particulier la caractéristique de pression continuant à être appliquée (6) lors de l'augmentation de la pression de freinage.

6. Procédé selon la revendication 4, **caractérisé en ce que** la pression de freinage continue à être réduite lorsque la caractéristique de ralentissement n'est pas présente dans le signal de ralentissement à l'intérieur du premier intervalle de temps prédéfini, en particulier la caractéristique de pression continuant à être appliquée (7) lors de l'abaissement de la pression de freinage.

7. Procédé selon la revendication 6, **caractérisé en ce que** la pression de freinage continue à être réduite jusqu'à une valeur minimale, en particulier la valeur minimale correspondant (7) à une amplitude de la caractéristique de pression.

8. Procédé selon la revendication 7, **caractérisé en ce qu'**une valeur fixe de pression est réglée (8) si la caractéristique de ralentissement n'est pas présente dans le signal de ralentissement à l'intérieur d'un deuxième intervalle de temps prédéfini.

9. Procédé selon la revendication 6, **caractérisé en ce que** la pression de freinage est augmentée jusqu'à ce que
- la caractéristique de ralentissement n'est plus présente une nouvelle fois,
- la pression de freinage de consigne initiale soit atteinte, ou
- une nouvelle pression de freinage de consigne nouvellement prédéfinie soit atteinte.

10. Procédé selon la revendication 1, **caractérisé en ce que** l'application de la caractéristique de pression (1) est effectuée par une modulation de la pression de freinage au moyen du premier générateur de pression de freinage (201).

11. Procédé selon la revendication 10, **caractérisé en ce que** la modulation est une modulation cyclique, en particulier une modulation cyclique à fréquence fixe et/ou à amplitude fixe.

12. Procédé selon la revendication 11, **caractérisé en ce que** la caractéristique de ralentissement est présente
- sous la forme d'une fréquence du signal de ralentissement, la fréquence de la caractéristique de ralentissement correspondant substantiellement à la fréquence de la caractéristique de pression,
- sous la forme d'une amplitude du signal de ralentissement,
- ou sous la forme d'une variation d'amplitude du signal de ralentissement.

13. Procédé selon la revendication 1, **caractérisé en ce que** l'application de la caractéristique de pression est omise ou interrompue si la vitesse de véhicule est inférieure à ou atteint une valeur limite de vitesse, en particulier si le véhicule est arrêté.

14. Procédé selon la revendication 1, dans lequel le système de freinage hydraulique comprend un générateur de pression de freinage supplémentaire (206), et dans lequel l'application d'une caractéristique de pression au moyen du premier générateur de pression de freinage (201) commence si une panne du générateur de pression de freinage supplémentaire est avérée.

15. Procédé selon la revendication 14, **caractérisé en ce que** le générateur de pression de freinage supplémentaire est une unité de modulation (206) permettant de moduler la pression de freinage de roue, et la panne est un défaut au niveau des composants de l'unité de modulation (206).

16. Procédé selon la revendication 1, **caractérisé en ce que** le signal de ralentissement correspond à un ralentissement (403) du véhicule ou à une dérivée temporelle du ralentissement (402) du véhicule.
